# EUROPÄISCHE PATENTSCHRIFT

(11) **EP 0 704 032 B1**
(45) Veröffentlichungstag und Bekanntmachung des Hinweises auf die Patenterteilung: **18.03.1998**
(21) Anmeldenummer: 94917560.8
(22) Anmeldetag: 10.06.1994
(51) Int. Cl.: F16K 31/00

(54) **SERVOVENTIL**
SERVO-VALVE
SERVO-SOUPAPE

(30) Priorität: 18.06.1993 DE 4320909
(43) Veröffentlichungstag der Anmeldung: 03.04.1996
(73) Patentinhaber: SIEMENS AKTIENGESELLSCHAFT, 80333 München (DE)
(72) Erfinder: NUSCHE, Georg, D-13629 Berlin (DE)
(86) Internationale Anmeldenummer: DE9400685
(87) Internationale Veröffentlichungsnummer: WO9500786

(56) Entgegenhaltungen:
- DE-U- 8 607 094
- GB-A- 2 134 223
- US-A- 3 638 973
- FLUID, April 1989 Seiten 34 - 37 'Der Piezo-Pillen-Knick' in der Anmeldung erwähnt

## Beschreibung

Die Erfindung bezieht sich auf ein Servoventil mit einem balkenförmigen, piezokeramischen Biegewandler, der an seinem einen Ende fest eingespannt ist und mit seinem anderen freien Ende bei elektrischer Spannungsbeaufschlagung aus einer eine Zuluftdüse des Servoventils verschließenden Lage in eine eine Abluftdüse verschließende Lage entgegen der Wirkung einer Rückstellfeder bringbar ist.

Bei einem bekannten Servoventil dieser Art (Zeitschrift "Fluid", April 1989, Seiten 34 und 37) ist der Biegewandler in einem Gehäuse untergebracht, daß neben einer Zuluft- und einer Abluftdüse einen Ausgang zu einem Betätigungselement eines Hauptventils aufweist. In dem Gehäuse des bekannten Servoventils ist auch eine Ansteuerelektronik vorgesehen, die auf einen Schaltimpuls hin eine elektrische Spannung an den Biegewandler anlegt. Der Biegewandler des bekannten Servoventils besteht aus zwei miteinander verbundenen polarisierten Schichten, die sich bei Beaufschlagung mit der elektrischen Spannung verbiegen, weil sie hinsichtlich ihres Werkstoffs so gewählt sind, daß aufgrund des piezoelektrischen Effektes unterschiedliche Ausdehnungen auftreten. Bei dem Biegewandler des bekannten Servoventils handelt es sich mechanisch betrachtet um einen mit seinem einen Ende fest eingespannten Biegebalken, der mit seinem anderen freien Ende je nach Ansteuerung die Zuluft- oder die Abluftdüse des Servoventils verschließen kann.

Der balkenförmige Biegewandler des bekannten Servoventils ist nicht nur infolge der ständigen Belastung durch die Rückstellfeder im Ruhezustand der Gefahr einer bleibenden Vorbiegung ausgesetzt, sondern in seinem Verhalten auch durch Temperatureinwirkung beeinflußt. Diese Einflüsse können so stark werden, daß nach einer gewissen Zeit der Biegewandler unter Umständen nicht mehr einwandfrei arbeitet. Deshalb wird bei einer Ausführungsform des bekannten Servoventils die Einspannung des Biegewandlers an seinem einen Ende nicht absolut fest vorgenommen, sondern so, daß eine Nachjustierung des Biegewandlers im Bereich des eingespannten Endes möglich ist.

Der Erfindung liegt die Aufgabe zugrunde, ein Servoventil mit einem balkenförmigen, piezokeramischen Biegewandler vorzuschlagen, bei dem mechanische und thermische Einflüsse auf das Biegeverhalten des Biegewandlers selbsttätig kompensiert werden.

Zur Lösung dieser Aufgabe ist bei einem Servoventil der eingangs angegebenen Art erfindungsgemäß das eine Ende des balkenförmigen Biegewandlers fest mit einer Achse verbunden, die sich quer zum Biegewandler erstreckt; die Achse ist mit einer steuerbaren Festhaltevorrichtung versehen, die jeweils nach Beendigung der Spannungsbeaufschlagung während der Rückbewegung des freien Endes des Biegewandlers zur Zuluftdüse gelöst wird.

Der wesentliche Vorteil des erfindungsgemäßen Servoventils besteht darin, daß durch die steuerbare Festhaltevorrichtung die Möglichkeit für den Biegewandler geschaffen ist, sich jeweils nach seiner Beaufschlagung mit einer elektrischen Spannung unter dem Einfluß der Rückstellfeder mit seinem freien Ende trotz womöglich innerer Spannungen bis zur Zuluftdüse bewegen zu können, indem bei dieser Rückbewegung des freien Endes des Biegewandlers eine Schwenkbewegung des Biegewandlers um die Achse erfolgt. Der Biegewandler legt sich also mit seinem freien Ende nach Beendigung der elektrischen Spannungsbeaufschlagung unbeeinflußt von irgendwelchen inneren Vorspannungen allein unter der Wirkung der Rückstellfeder gegen die Zuluftdüse, wodurch jedes Mal eine neue Positionierung des Biegewandlers erfolgt. Danach wird infolge entsprechender Ansteuerung der Festhaltevorrichtung die Achse durch die Festhaltevorrichtung in der jeweils nach Abschluß der Rückbewegung des freien Endes des Biegewandlers angenommenen Lage festgehalten. Aus dieser Lage heraus erfolgt dann bei einer nächsten Spannungsbeaufschlagung infolge Biegung eine Bewegung des freien Endes des Biegewandlers zur Abluftdüse hin. Positionskorrekturen des Biegewandlers durch Justierung entfallen; die Mittel zur Justierung werden nicht benötigt.

Bei dem erfindungsgemäßen Servoventil kann die Festhaltevorrichtung in unterschiedlicher Weise ausgebildet sein, sofern sie nur in der Lage ist, die mit dem Biegewandler verbundene Achse gesteuert festzuhalten. Als besonders vorteilhaft wird es aber im Hinblick auf eine leichte Herstellung angesehen, wenn die Festhaltevorrichtung ein Auflager und eine bewegliche Bremsbacke aufweist, zwischen denen die Achse verläuft.

Die Betätigung der Festhaltevorrichtung kann in unterschiedlicher Weise erfolgen; beispielsweise erscheint es möglich, die Bremsbacke elektrisch bzw. elektromagnetisch zu steuern, so daß jeweils nach Beendigung der Spannungsbeaufschlagung durch einen elektrischen Impuls die Bremsbacke freigegeben wird, bis das freie Ende des Biegewandlers wieder vor der Zuluftdüse liegt. Im Hinblick auf eine kostengünstige Herstellung des erfindungsgemäßen Servoventils wird es jedoch als vorteilhaft erachtet, wenn die Bremsbacke zwischen einer Bremsmembran und einer Rückstellmembran aufgehängt ist und wenn die Bremsmembran eine Öffnung in einer Außenwand des Servoventils gegenüber dem Innenraum des Ventils abschließt und mit einem Druck beaufschlagt ist; die Rückstellmembran verschließt ein Loch in einer Zwischenwand, die den Innenraum von einem von der Abluftdüse ausgehenden Abluftkanal trennt, der mit einer drosselnden Abluftöffnung versehen ist. Als Druck wird bei dieser Ausführungsform der Festhaltevorrichtung vorteilhafterweise der geregelte Vordruck benutzt, der bei einem Servoventil der gattungsgemäßen Art in der Regel an der Zuluftdüse ansteht.

Im Hinblick auf eine besonders zuverlässige Wirkungsweise der Festhaltevorrichtung wird es als vorteilhaft angesehen, wenn die Bremsbacke einerseits unmittelbar an der Bremsmembran und andererseits über ein die Achse und das Auflager durchsetzendes Verbindungsglied an der Rückstellmembran befestigt ist. In diesem Falle wirkt eine Auslenkung der Rückstellmembran direkt auf die Bremsbacke, wodurch bei einem Öffnen der Abluftdüse schnell und zuverlässig die Festhaltevorrichtung gelöst wird.

Die Zuführung der elektrischen Spannung an die beiden Seiten des Biegewandlers kann bei dem erfindungsgemäßen Servoventil in unterschiedlicher Weise erfolgen; als vorteilhaft wird es jedoch erachtet, wenn das Auflager als Kontaktfederanordnung zur Spannungsbeaufschlagung ausgebildet ist und die Achse mindestens zwei elektrisch voneinander isolierte, leitende Bereiche aufweist, über die die Kontaktfederanordnung galvanisch mit den beiden Seiten des Biegewandlers verbindbar ist. Dabei können die beiden leitenden Bereiche beispielsweise durch voneinander isolierte Leitbeläge gebildet werden, die außen auf der Achse aufgebracht sind, sofern es sich bei der Achse um ein Isolierteil handelt. Bei einer metallischen Achse ist eine Teilung vorzunehmen, und es sind die beiden Teile gegeneinander durch Isolierschichten zu trennen.

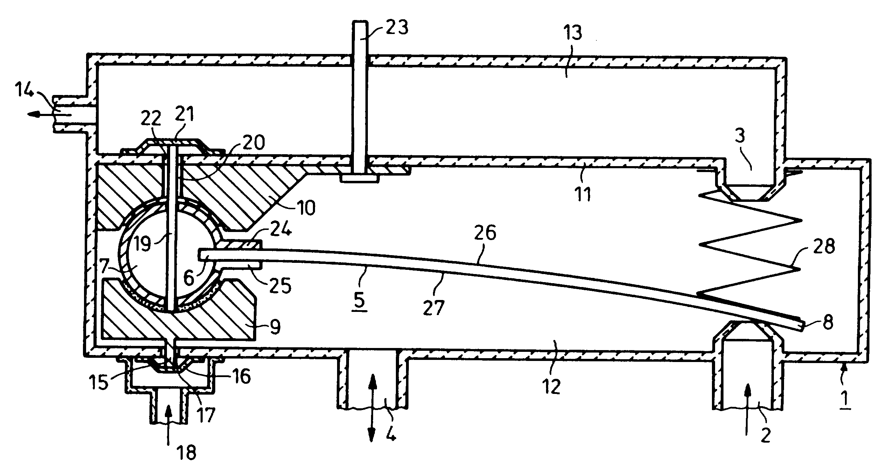

Zur Erläuterung der Erfindung ist in der Figur ein Schnitt durch ein Ausführungsbeispiel des erfindungsgemäßen Servoventils in schematischer Darstellung vergrößert wiedergegeben.

Das dargestellte Servoventil weist ein Gehäuse 1 auf, das mit einer Zuluftdüse 2 und einer Abluftdüse 3 versehen ist. Außerdem ist über eine weitere Düse 4 eine Beaufschlagung eines Betätigungselementes eines nicht dargestellten Hauptventils möglich.

Innerhalb des Gehäuses 1 ist ein balkenförmiger, piezokeramischer Biegewandler 5 vorhanden, der mit seinem einen Ende 6 fest mit einer Achse 7 verbunden, dort also fest eingespannt ist. Das andere freie Ende 8 des Biegewandlers 5 ist zwischen der Zuluftdüse 2 und der Abluftdüse 3 hin- und herbewegbar, wie später noch erläutert wird.

Die Achse 7 ist frei zwischen einer Bremsbacke 9 und einem Auflager 10 gehalten, das fest an einer Zwischenwand 11 angebracht ist, die den Innenraum 12 des Gehäuses 1 von einem Abluftkanal 13 trennt, der von der Abluftdüse 3 ausgeht; der Abluftkanal 13 ist an seinem von der Abluftdüse 3 abgewandten Ende mit einer Abluftöffnung 14 versehen, die aufgrund ihrer Abmessungen eine drosselnde Wirkung hat.

Wie die Figur ferner erkennen läßt, ist die Bremsbacke über einen kleinen Ansatz 15 unmittelbar an einer Bremsmembran 16 befestigt, die eine Öffnung 17 im Gehäuse 1 verschließt. Die Bremsmembran 16 ist über eine Zuleitung 18 mit einem geregelten Vordruck beaufschlagt, der von dem Servoventil in nicht dargestellter Weise zur Verfügung gestellt wird. Der geregelte Vordruck steht ständig an der Bremsmembran 16 an, so daß von dieser Bremsmembran 16 ein Druck der Bremsbacke 9 in Richtung auf die Achse 7 ausgeübt wird. Die Bremsbacke 9 ist über ein Verbindungsglied 19, das die Achse 7 lose durchsetzt und auch frei durch ein Durchgangsloch 20 im Auflager 10 geführt ist, mit einer Rückstellmembran 21 verbunden, die ein Loch 22 in der Zwischenwand 11 verschließt. Die Bremsbacke 9 ist also gewissermaßen zwischen der Bremsmembran 16 und der Rückstellmembran 21 aufgehängt.

Das Auflager 10 ist als Kontaktfederanordnung ausgeführt und besteht aus zwei in der Figur hintereinander angeordneten Kontaktfedern; über einen Anschlußstift 23 erfolgt eine Beaufschlagung mit einer elektrischen Spannung. Ein weiterer Anschlußstift befindet sich in der Figur hinter dem Anschlußstift 23. Die Kontaktfedern sind über leitende Beläge 24 und 25 galvanisch mit der Oberseite 26 bzw. der nicht dargestellten oberen Schicht des Biegewandlers 5 und mit der Unterseite 27 bzw. der nicht dargestellten unteren Schicht des Biegewandlers 5 verbunden.

Eine Rückstellfeder 28 sorgt dafür, daß bei fehlender elektrischer Spannungsbeaufschlagung der Biegewandler 5 mit seinem freien Ende 8 gegen die Zuluftdüse 2 gedrückt wird und diese verschlossen hält. Bei Spannungsbeaufschlagung wird das freie Ende 8 des Biegewandlers 5 entgegen der Kraft der Rückstellfeder 28 gegen die Abluftdüse 3 bewegt und verschließt dann diese, so daß die in diesem Betriebszustand eintretende Luft über die Öffnung 4 zum Betätigungselement des Hauptventils strömen kann.

Das in der Figur dargestellte Servoventil arbeitet im einzelnen in folgender Weise:
Liegt keine Beaufschlagung des Servoventils mit einer elektrischen Spannung über den Anschlußstift 23 vor, befindet sich also das Servoventil in seiner Ruhelage, dann nimmt der Biegewandler 5 die in der Figur dargestellte Stellung ein, verschließt also mit seinem freien Ende 8 die Zuluftdüse 2. In diesem Zustand ist auch die Bremsbacke 9 gegen die Achse 7 gedrückt, weil auf die Bremsmembran 16 über die Zuleitung 18 der geregelte Vordruck wirkt. Die Achse 7 ist damit gegen das Auflager 10 gedrückt, wodurch eine elektrische Kontaktgabe zwischen den leitenden Bereichen 24 und 25 und dem Auflager 10 gegeben ist.

Wird das Servoventil mit einer elektrischen Spannung beaufschlagt, dann biegt sich der Biegewandler 5 nach oben, und das freie Ende 8 des Biegewandlers 5 verschließt die Abluftdüse 3; es wird über die Öffnung 4 das nicht dargestellte Hauptventil betätigt. Wird die Spannungszuführung über den Anschlußstift 23 beendet, dann geht die Durchbiegung des Biegewandlers 5 zurück und das freie Ende 8 wird durch die Rückstellfeder 28 gegen die Zuluftdüse 2 geführt. Gleichzeitig strömt über die Abluftdüse 3 und die Abluftöffnung 14 Luft ab, die jedoch im Abluftkanal 13 unter vorübergehender Bildung eines Staudrucks gestaut wird. Der Staudruck führt aufgrund entsprechender Bemessung der Rückstellmembran dazu, daß die Rückstellmembran 21 betätigt wird. Dadurch wird vorübergehend die Bremsbacke 9 gelöst, und es kann sich die Achse 7 mit dem Biegewandler 5 frei drehen. Der Biegewandler 5 legt sich also frei gegen die Zuluftdüse an und ist somit neu positioniert. Mögliche innere Verspannungen des Biegewandlers 5 durch mechanische und thermische Einflüsse sind dadurch kompensiert. Ist der Staudruck im Abluftkanal 13 abgebaut, legt sich die Bremsbacke 9 unter dem Einfluß der mit dem geregelten Vordruck belasteten Bremsmembran 16 wieder gegen die Achse 7 und drückt diese unter Festhalten gegen das Auflager 10. Bei einer erneuten Beaufschlagung mit einer elektrischen Spannung beginnt dann der Biegevorgang wiederum neu.

## Patentansprüche

1. Servoventil mit einem balkenförmigen, piezokeramischen Biegewandler (5), der an seinem einen Ende (6) fest eingespannt ist und mit seinem anderen freien Ende (8) bei elektrischer Spannungsbeaufschlagung aus einer eine Zuluftdüse (2) des Servoventils verschließenden Lage in eine eine Abluftdüse (3) verschließende Lage entgegen der Wirkung einer Rückstellfeder (28) bringbar ist,
**dadurch gekennzeichnet,**
daß das eine Ende (6) des balkenförmigen Biegewandlers (5) fest mit einer Achse (7) verbunden ist, die sich quer zum Biegewandler (5) erstreckt, und daß die Achse (7) mit einer steuerbaren Festhaltevorrichtung (9,10) versehen ist, die jeweils nach Beendigung der Spannungsbeaufschlagung während der Rückbewegung des freien Endes (8) des Biegewandlers (5) zur Zuluftdüse (2) gelöst wird.

2. Servoventil nach Anspruch 1,
**dadurch gekennzeichnet**,
daß die Festhaltevorrichtung ein Auflager (10) und eine bewegbare Bremsbacke (9) aufweist, zwischen denen die Achse (7) verläuft.

3. Servoventil nach Anspruch 1 oder 2,
**dadurch gekennzeichnet** ,
daß die Bremsbacke (9) zwischen einer Bremsmembran (16) und einer Rückstellmembran (21) aufgehängt ist, daß die Bremsmembran (16) eine Öffnung (15) in einer Außenwand (1) des Servoventils gegenüber dem Innenraum (12) des Ventils abschließt und mit einem Druck beaufschlagt ist und daß die Rückstellmembran (21) ein Loch (22) in einer Zwischenwand (11) verschließt, die den Innenraum (12) von einem von der Abluftdüse (3) ausgehenden Abluftkanal (13) trennt, der mit einer drosselnden Abluftöffnung (14) versehen ist.

4. Ventil nach Anspruch 3,
**dadurch gekennzeichnet** ,
daß die Bremsbacke (9) einerseits unmittelbar an der Bremsmembran (16) und andererseits über ein die Achse (7) und das Auflager (10) durchsetzendes Verbindungsglied (19) an der Rückstellmembran (21) befestigt ist.

5. Servoventil nach einem der Ansprüche 2 bis 4,
**dadurch gekennzeichnet** ,
daß das Auflager (10) als Kontaktfederanordnung zur Spannungsbeaufschlagung ausgebildet ist und daß die Achse (7) zumindest zwei elektrisch voneinander isolierte, leitende Bereiche (24,25) aufweist, über die die Kontaktfederanordnung galvanisch mit den beiden Seiten (26,27) des Biegewandlers (5) verbindbar ist.

## Claims

1. Servo-valve having a bar-shaped, piezoceramic bending transformer (5), which is firmly clamped at its one end (6) and the other free end (8) of which, in the case of the application of electrical voltage, can be brought, against the action of a restoring spring (28), out of a position which closes a supply-air nozzle (2) of the servo-valve into a position which closes an exhaust-air nozzle (3), characterised in that the one end (6) of the bar-shaped bending transformer (5) is securely connected to an axle (7), which extends transversely with respect to the bending transformer (5), and in that the axle (7) is provided with a controllable restraining device (9, 10), which is released, in each case after the end of the application of voltage, during the return movement of the free end (8) of the bending transformer (5) towards the supply-air nozzle (2).

2. Servo-valve according to claim 1, characterised in that the restraining device has a support (10) and a movable brake shoe (9), between which the axle (7) extends.

3. Servo-valve according to claim 1 or 2, characterised in that the brake shoe (9) is suspended between a braking membrane (16) and a restoring membrane (22), in that the braking membrane (16) closes off an opening (15) in an outside wall (1) of the servo-valve with respect to the inside space (12) of the valve and a pressure is applied thereto, and in that the restoring membrane (21) closes off a hole (22) in an intermediate wall (11) which separates the inside space (12) from an exhaust-air duct (13), which originates from the exhaust-air nozzle (3) and is provided with a throttling exhaust-air opening (14).

4. Valve according to claim 3, characterised in that on the one hand the brake shoe (9) is fastened directly to the braking membrane (16) and on the other hand is fastened to the restoring membrane (21) by way of a connecting element (19) which penetrates the axle (7) and the support (10).

5. Servo-valve according to one of the claims 2 to 4, characterised in that the support (10) is constructed as a contact spring arrangement for the application of voltage, and in that the axle (7) has at least two conductive regions (24, 25) which are electrically insulated with respect to each other, by way of which regions the contact spring arrangement can be galvanically connected to the two sides (26, 27) of the bending transformer (5).

## Revendications

1. Servo-soupape comportant un convertisseur (5) de flexion en forme de barre en céramique piézo-électrique, qui est bloqué à l'une (6) de ses extrémité et qui, par son autre extrémité (8) libre peut, en cas d'alimentation en tension électrique, être amenée à l'encontre de l'effet d'un ressort (28) de rappel d'une position fermant une buse (2) d'alimentation en air de la servo-soupape à une position servant une buse (3) d'évacuation, caractérisé en ce qu'une extrémité (6) du convertisseur (5) de flexion en forme de barre est reliée de manière fixe à un axe (7) qui s'étend transversalement au convertisseur (5) de flexion, et en ce que l'axe (7) est muni d'un dispositif (9, 10) de retenue qui peut être commandé et qui est déclenché chaque fois qu'il est mis fin à l'alimentation en tension, pendant le mouvement de retour de l'extrémité (8) libre du convertisseur (5) de flexion à la buse (2) d'alimentation en air.

2. Servo-soupape suivant la revendication 1, caractérisé en ce que le dispositif de retenue comporte un support (10) et une mâchoire (9) de freinage mobile entre lesquels s'étend l'axe (7).

3. Servo-soupape suivant la revendication 1 ou 2, caractérisé en ce que la mâchoire (9) de freinage est suspendue entre une membrane (16) de freinage et une membrane (21) de rappel, en ce que la membrane (16) de freinage ferme, par rapport à l'intérieur (12) de la soupape, une ouverture (15) ménagée dans une paroi (1) extérieure de la servo-soupape et est alimentée en une pression, et en ce que la membrane (21) de rappel ferme un trou (22) ménagé dans une paroi (11) intermédiaire, qui sépare l'intérieur (12) d'un canal (13) d'évacuation d'air qui part de la buse (3) d'évacuation et qui est muni d'une ouverture (14) d'évacuation à étranglement.

4. Servo-soupape suivant la revendication 3, caractérisé en ce que la mâchoire (9) de freinage est fixée, d'une part, directement à la membrane (16) de freinage et, d'autre part, par l'intermédiaire d'un élément (19) de liaison traversant l'axe (7) et le support (10), à la membrane (21) de rappel.

5. Servo-soupape suivant l'une des revendications 2 à 4, caractérisé en ce que le support (10) est réalisé en dispositif à ressorts de contact en vue de l'alimentation en tension et en ce que l'axe (7) comporte au moins deux zones (24, 25) conductrices de l'électricité et isolées l'une de l'autre du point de vue électrique, par l'intermédiaire desquelles le dispositif à ressort de contact peut être relié de manière galvanique au deux faces (26, 27) du convertisseur (5) de flexion.
